# EUROPÄISCHE PATENTANMELDUNG

(11) **EP 1 752 667 A2**
(43) Veröffentlichungstag der Anmeldung: **14.02.2007**
(21) Anmeldenummer: 06014896.2
(22) Anmeldetag: 18.07.2006
(51) Int. Cl.: F16B 17/00, B29C 45/00, F16B 7/00, B29C 69/00, B29C 65/56

(54) **Verfahren und Werkzeug zum Formen von Bauteilen, insbesondere von Kunststoff-Bauteilen**

(30) Priorität: 08.08.2005 DE 102005037810
(71) Anmelder: Behr GmbH & Co. KG, 70469 Stuttgart (DE)
(72) Erfinder: Kuhn, Robert, 70839 Gerlingen (DE); Wildermuth, Joachim, 71554 Weissach im Tal (DE)

(57) **Zusammenfassung**

Die Erfindung betrifft ein Verfahren zum Formen von Bauteilen (1, 2), insbesondere Kunststoff-Bauteilen, wobei in einem Bereich einer Fügestelle (F) von zwei Bauteilen (1, 2) deren angrenzenden Seitenränder (1.1, 2.1) derart zueinander korrespondierend geformt werden, dass die Seitenränder (1.1, 2.1) ineinander greifen.

## Beschreibung

Die Erfindung betrifft ein Verfahren zum Formen von Bauteilen, insbesondere von Kunststoff-Bauteilen. Darüber hinaus betrifft die Erfindung ein Bauteilpaar aus zwei über eine Formschlussverbindung zu fügende Bauteile und ein Werkzeug zur Durchführung des Verfahrens.

Dichte Verbindungen von Bauteilen, z. B. von Kunststoff-Bauteilen, sind beispielsweise bei Übergängen an Gebläsezungen in Luftführungskanälen von Kraftfahrzeugen erforderlich. Die Verbindungen sollen dabei durch Aneinanderfügen zweier Kunststoff-Bauteile hergestellt werden können.

Im Stand der Technik werden dichte Verbindungen von Kunststoff-Bauteilen üblicherweise durch Nut-Feder-Anordnungen realisiert. Die Kunststoff-Bauteile werden als Spritzteile in Formwerkzeugen hergestellt. Dabei sind für die Realisierung von Nut-Feder-Anordnungen im Formwerkzeug Schieber erforderlich, um ein Auswerfen zu ermöglichen.

Die Verwendung von Schiebem ist aufwendig. Zudem können Schieber nicht in allen Fällen verwendet werden, beispielsweise aufgrund der Gestalt des Kunststoff-Bauteiles.

Generell unterliegen im Spritzguss hergestellte Kunststoffteile einem Verzug durch den sich anschließenden Abkühlungsprozess.

Der Erfindung liegt daher die Aufgabe zugrunde, ein verbessertes Verfahren der eingangs genannten Art und ein zugehöriges Werkzeug anzugeben, welche die Herstellung von dicht verbindbaren Kunststoff-Bauteilen erlauben ohne Schieber für Verbindungsteile zu erfordern. Des Weiteren ist ein verbessertes Bauteilpaar mit zwei, an einer Fügestelle zu verbindenden Bauteilen anzugeben.

Die Aufgabe wird gelöst durch die Merkmalskombination des Anspruchs 1 sowie durch ein Werkzeug, welches die in Anspruch 20 angegebenen Merkmale aufweist, Hinsichtlich des Bauteilpaars wird die Aufgabe gelöst durch die Merkmalskombination des Anspruchs 12.

Vorteilhafte Ausgestaltungen sind Gegenstand der abhängigen Ansprüche.

Die Erfindung geht dabei von der Überlegung aus, dass eine Verbindung bzw. ein Fügen von Bauteilen, insbesondere von Kunststoff-Bauteilen, an einer Trennebene besonders dicht ausgeführt sein sollte. Insbesondere für ein aus zwei Gehäuse-Bauteilen durch Spritzgießen gebildetes Gehäuse ist vorgesehen, dass im Bereich der Fügestelle der Bauteile deren angrenzenden Seitenränder derart zueinander korrespondierend geformt werden, dass die Seitenränder ineinander greifen. Mit anderen Worten: Die Seitenränder der Bauteile werden miteinander verzahnt, so dass sich die Seitenränder der zu fügenden Bauteile zumindest bereichsweise überdecken. Hierdurch bilden die zwei Bauteile mittels der zueinander korrespondierend geformten Seitenränder im Bereich der Fügestelle in besonders einfacher Art und Weise eine Formschlussverbindung. Diese ineinander greifende und somit bereichsweise einander überdeckende Formschlussverbindung ermöglicht eine besonders dichte Fügestelle. Zudem ist das Formwerkzeug besonders einfach aufgebaut, insbesondere kann ein im Stand der Technik bei herkömmlichen Nut-Feder-Verbindungen erforderliche Schieber vermieden werden.

In einer möglichen Ausführungsform werden die Seitenränder der Bauteile derart korrespondierend geformt, dass das eine Bauteil in Ausform- oder Auswurfrichtung des Formwerkzeugs in das andere Bauteil einführbar ist.

Dabei kann zumindest einer der Bauteile ohne Schieber aus dem Formwerkzeug ausgeworfen werden.

In einer möglichen Ausführungsform für das Ineinandergreifen der Seitenränder wird der Seitenrand des einen Bauteils mit mehreren, im Wesentlichen gleichförmigen aus dem Seitenrand herausragenden Zahnelementen versehen. Vorzugsweise sind die Zahnelemente in Längsausrichtung des Seitenrandes alternierend an den gegenüberliegenden Seitenflächen angeordnet. Mit anderen Worten: Das betreffende Bauteil weist einen kronenartig verlaufenden Seitenrand auf, wobei die Zacken der Krone wechselseitig versetzt angeordnet sind.

Der gegenüberliegende und anzufügende Seitenrand des anderen Bauteils wird zweckmäßigerweise in Längsrichtung gesehen mit mehreren, im Wesentlichen gleichförmigen Ausnehmungen versehen. Beispielsweise werden die Ausnehmungen in Längsausrichtung der Oberfläche des Seitenrandes alternierend an den gegenüberliegenden Seitenflächen angeordnet. Durch die altemierende Anordnung der Ausnehmungen und der dazu korrespondierenden alternierenden Anordnung der Zahnelemente ist in besonders einfacher Art und Weise eine reißverschlussartige Fügestelle mit sich teilweise überdeckenden Seitenrändern gebildet. Dazu verlaufen die Seitenränder in Längsrichtung mäanderförmig durch wechselseitig versetzt angeordnete Zahnelemente bzw. Vertiefungen. Dieses reißverschlussartige Ineinandergreifen der Seitenränder mit teilweiser oder vollständiger Überdeckung ermöglicht eine dichte Verbindung der beiden Bauteile. Darüber hinaus wird der bei Kunststoff-Spritzteilen typische Verzug durch die unterschiedlichen Dicken der mäanderförmigen Seitenränder oder Seitenflächen vermindert.

In einer weiteren Ausführungsform weisen die Ausnehmungen zu den Abmessungen und/oder der Form der Zahnelemente korrespondierende Abmessungen und/oder eine korrespondierende Form auf. Insbesondere entspricht die Tiefe der jeweiligen Ausnehmung in etwa der Länge des Zahnelements.

Zweckmäßigerweise erFolgt das Formen des oder der Kunststoff-Bauteile durch Spritzgießen in ein Formwerkzeug. Dabei wird vorteilhafterweise einer der angrenzenden Seitenränder eines der Bauteil derart geformt, dass beispielsweise die Zahnelemente des einen Bauteils in Ausform- und/oder Auswurfrichtung des Formwerkzeugs in die Ausnehmungen des anderen Bauteils einführbar sind oder umgekehrt. Dadurch kann das betreffende Bauteil ohne Schieber für den Bereich der Verbindung aus dem Formwerkzeug ausgeworfen werden.

Ausführungsbeispiele der Erfindung werden anhand von Zeichnungen näher erläutert. Darin zeigen:
- Fig. 1: schematisch zwei angrenzende Seitenränder zweier Bauteile im Bereich einer Fügestelle,
- Fig. 2: schematisch ein Bauteil mit einem zugehörigen Seitenrand in perspektivischer Darstellung,
- Fig.3: schematisch ein Bauteilpaar im getrennten Zustand in perspektivischer Darstellung,
- Fig. 4: schematisch das Bauteilpaar gemäß Figur 3 im gefügten Zustand in perspektivischer Darstellung,
- Fig. 5: schematisch eine weitere Ausführungsform für ein Bauteil eines weiteren Bauteilpaars im Querschnitt und
- Fig. 6: schematisch eine weitere Ausführungsform für ein Bauteil des weiteren Bauteilpaars gemäß Figur 6 im Querschnitt.

Einander entsprechende Teile sind in allen Figuren mit den gleichen Bezugszeichen versehen.

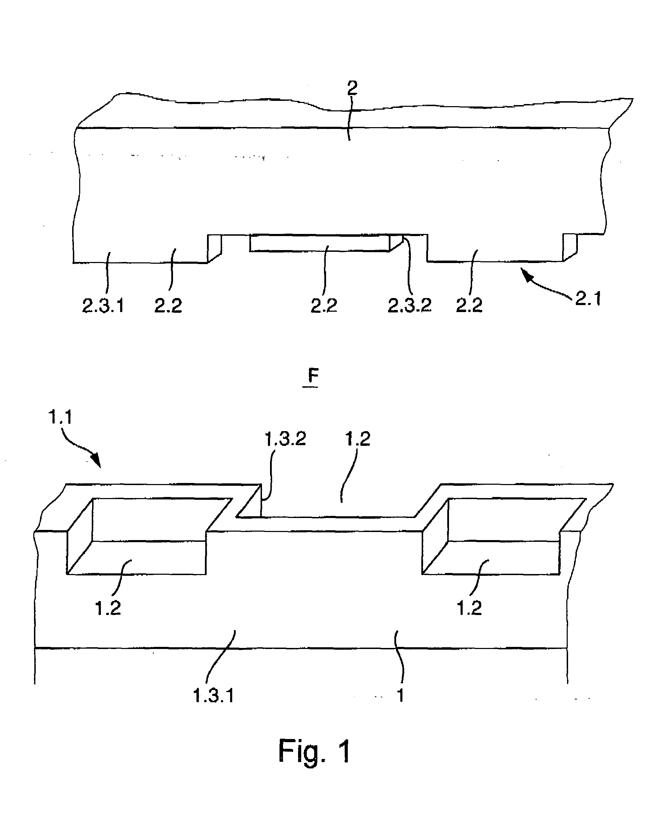

Figur 1 zeigt zwei Bauteile 1 und 2, welche im Bereich einer Fügestelle F über deren zugehörigen angrenzenden Seitenränder 1.1 bzw. 2.1 formschlüssig miteinander verbunden werden.

Beide Bauteile 1 und 2 sind beispielsweise Kunststoff-Bauteile für einen Lüftungskanal einer Belüftungs- und/oder Klimaanlage eines Kraftfahrzeugs. Insbesondere handelt es sich um Kunststoff-Bauteile im Bereich von Übergängen im Lüftungskanal, z. B. im Bereich einer Gebläsezunge.

Für eine Dichtheit derartig einander angrenzender Bauteile 1 und 2 im Bereich der Fügestelle F sind deren angrenzenden Seitenränder 1.1 bzw. 2.1 zueinander korrespondierend geformt, so dass die Seitenränder 1.1 und 2.1 im gefügten Zustand ineinander greifen oder miteinander verzahnt werden.

Hierzu weist das eine Bauteil 1 bereichsweise einen mäanderförmigen Seitenrand 1.1, der einstückig mit dem Bauteil 1 geformt ist. D.h. der Seitenrand 1.1 weist mehrere im Wesentlichen gleichförmige Ausnehmungen 1.2 auf, die in Längsrichtung der Oberfläche des Seitenrandes 1.1 alternierend an den gegenüberliegenden Seitenflächen 1.3.1 bzw. 1.3.2 angeordnet sind.

Das andere Bauteil 2 weist einen mit dem Seitenrand 1.1 hinsichtlich Form und Abmessungen im Wesentlichen korrespondierenden Seitenrand 2.1 auf, der mit mehreren, im Wesentlichen gleichförmigen aus dem Seitenrand 2.1 herausragenden Zahnelemente 2.2 versehen ist. Die Zahnelemente 2.2 sind in Längsrichtung des Seitenrandes 2.1 gesehen alternierend an den gegenüberliegenden Seitenflächen 2.3.1 bzw. 2.3.2 angeordnet. Die Länge der Zahnelemente 2.2 entspricht dabei in etwa der Tiefe der Ausnehmungen 1.2. Auch die Form und somit die äußeren Abmessungen der Zahnelemente 2.2 bzw. die inneren Abmessungen der Ausnehmungen 1.2 sind in etwa identisch, so dass die Seitenränder 1.1 und 2.1 im gefügten Zustand der Bauteile 1 bzw. 2 ineinander greifen.

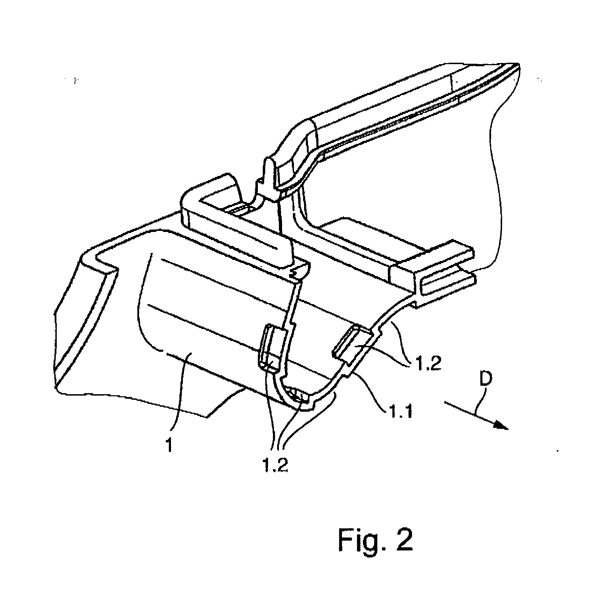

Figur 2 zeigt eine mögliche Ausführungsform für ein Bauteil 1 mit einem mäanderförmigen Seitenrand 1.1. Der mäanderförmige Seitenrand 1.1 verläuft quer zu einer Ausformungsrichtung D desjenigen Formwerkzeuges, das zur Herstellung des Bauteils 1 verwendet wird. Die Längsachsen der Ausnehmungen 1.2 sind parallel zu der Ausformungs- und Auswurfrichtung D des Formwerkzeuges ausgerichtet. Daher kann das Bauteil 1 in dem Formwerkzeug ohne Schieber geformt und ausgeworfen werden. Die Ausnehmungen 1.2, die durch die Mäandergestalt entstehen, können dabei in nicht näher dargestellter Art und Weise entweder parallel mit oder entgegen der Ausformungs- und Auswurfrichtung D verjüngend geformt sein.

Ein an das Bauteil 1 anzufügende weitere Bauteil 2 hat Zahnelemente 2.2, die zu den Ausnehmungen 1.2 der Mäandergestalt korrespondierend ausgebildet sind. Durch Einführen der Zahnelemente 2.2 in die Ausnehmungen 1.2 können die beiden Bauteile 1 und 2 in dem Bereich der Mäandergestalt dicht verbunden werden. Die mäanderförmige Wand des Bauteils 1 und die Zahnelemente 2.2 des anderen anzufügenden Bauteils 2 greifen reißverschlussartig ineinander.

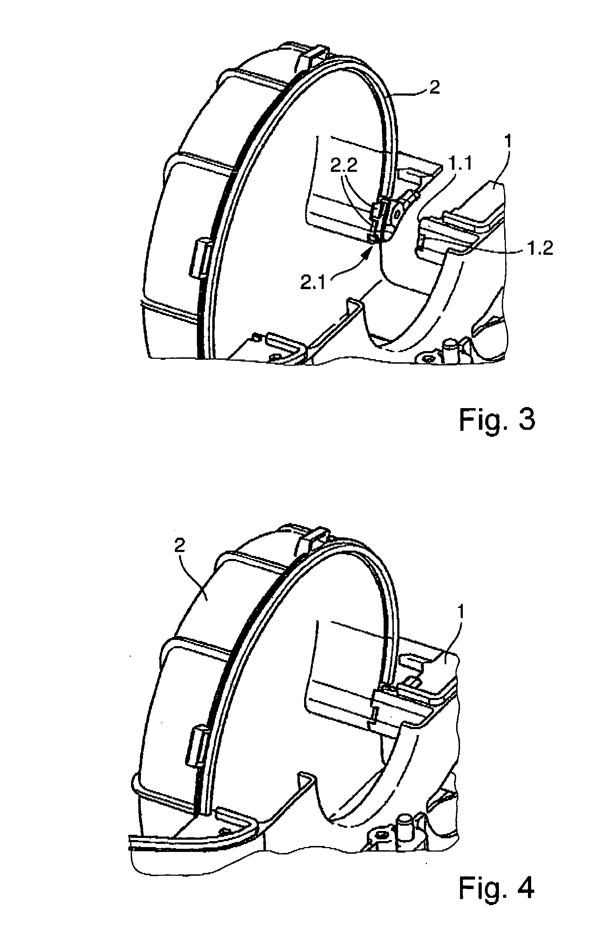

In Figur 3 ist eine Ausführungsform für ein Bauteilpaar im getrennten Zustand gezeigt, das aus einem ersten Bauteil 1 und einem zweiten Bauteil 2 gebildet wird. Am ersten Bauteil 1 ist eine Mäandergestalt mit zwei versetzten Ausnehmungen 1.2 angeordnet, wobei die hintere Ausnehmungen 1.2 durch die Mäandergestalt verdeckt ist. Am zweiten Bauteil 2 sind zwei versetzte Zahnelemente 2.2 komplementär zu den Ausnehmungen 1.2 des ersten Bauteils 1 angeformt.

In Figur 4 ist das Bauteilpaar gemäß Figur 3 im gefügten Zustand dargestellt. Zu diesem Zweck sind die Zahnelemente 2.2 in die Ausnehmungen 1.2 eingeführt. Sie bilden eine dichte Verbindung der beiden Bauteile 1 und 2.

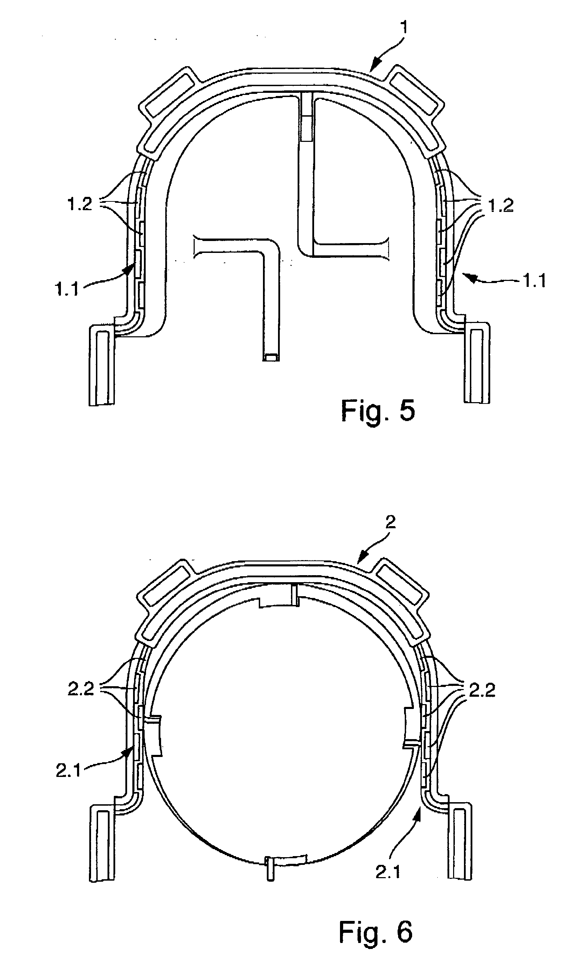

Figur 5 zeigt eine weitere mögliche Ausführungsform für ein Bauteil 1 eines weiteren Bauteilpaars. Es ist an einem Seitenrand 1.1 an zwei gegenüberliegenden Seitenflächen 1.3.1 und 1.3.2 in Mäandergestalt geformt, so dass sich an beiden Seitenflächen 1.3.1 und 1.3.2 jeweils fünf versetzte Ausnehmungen 1.2 ergeben. Die Mäandergestalt ist in der Dicke der jeweiligen Wand des Bauteils 1 ausgeformt.

In Figur 6 ist das zugehörige andere anzufügende Bauteil 2 des weiteren Bauteilpaars abgebildet. Es ist mit zehn Zahnelementen 5 ausgeformt, die korrespondierend zu den Ausnehmungen 1.2 des Bauteils 1 gemäß Figur 5 angeordnet sind. Die beiden Bauteile 1 und 2 können daher durch Fügen im Bereich der Mäandergestalt dicht verbunden werden.

## Patentansprüche

1. Verfahren zum Formen von Bauteilen (1, 2), insbesondere Kunststoff-Bauteilen, wobei in einem Bereich einer Fügestelle (F) von zwei Bauteilen (1, 2) deren angrenzenden Seitenränder (1.1, 2.1) derart zueinander korrespondierend geformt werden, dass die Seitenränder (1.1, 2.1) ineinander greifen.

2. Verfahren nach Anspruch 1, **dadurch gekennzeichnet, dass** die zwei Bauteile (1, 2) mittels der zueinander korrespondierend geformten Seitenränder (1.1, 2.1) im Bereich der Fügestelle (F) eine Formschlussverbindung bilden.

3. Verfahren nach Anspruch 1 oder 2, **dadurch gekennzeichnet, dass** die Seitenränder (1.1, 2.1) der Bauteile (1, 2) derart korrespondierend geformt werden, dass das eine Bauteil (1, 2) in Ausform- oder Auswurfrichtung (D) des Formwerkzeugs in das andere Bauteil (1, 2) einführbar ist.

4. Verfahren nach einem der Ansprüche 1 bis 3, **dadurch gekennzeichnet, dass** der Seitenrand (2.1) des einen Bauteils (2) mit mehreren, im Wesentlichen gleichförmigen aus dem Seitenrand (2.1) herausragenden Zahnelementen (2.2) versehen wird.

5. Verfahren nach Anspruch 4, **dadurch gekennzeichnet, dass** die Zahnelemente (2.2) in Längsausrichtung des Seitenrandes (2.1) alternierend an den gegenüberliegenden Seitenflächen (2.3.1, 2.3.2) angeordnet sind.

6. Verfahren nach einem der Ansprüche 1 bis 5, **dadurch gekennzeichnet, dass** der Seitenrand (1.1) des anderen Bauteils (1) in Längsrichtung gesehen mit mehreren, im Wesentlichen gleichförmigen Ausnehmungen (1.2) versehen wird.

7. Verfahren nach Anspruch 6, **dadurch gekennzeichnet, dass** die Ausnehmungen (1.2) in Längsausrichtung der Oberfläche des Seitenrandes (1.1) alternierend an den gegenüberliegenden Seitenflächen (1.3.1, 1.3.2) angeordnet werden.

8. Verfahren nach Anspruch 6 oder 7, **dadurch gekennzeichnet, dass** die Ausnehmungen (1.2) zu den Abmessungen und/oder der Form der Zahnelemente (2.2) korrespondierende Abmessungen und/oder eine korrespondierende Form aufweisen.

9. Verfahren nach einem der Ansprüche 6 bis 8, **dadurch gekennzeichnet, dass** die Tiefe der jeweiligen Ausnehmung (1.2) der Länge des Zahnelements (2.2) entspricht.

10. Verfahren nach einem der Ansprüche 6 bis 9, **dadurch gekennzeichnet, dass** die Zahnelemente (2.2) des einen Bauteils (2) in Ausform- und/oder Auswurfrichtung (D) des Formwerkzeugs in die Ausnehmungen (1.2) des anderen Bauteils (1) einführbar sind.

11. Verfahren nach einem der Ansprüche 1 bis 10, **dadurch gekennzeichnet, dass** das Formen des oder der Kunststoff-Bauteile durch Spritzgießen in ein Formwerkzeug erfolgt.

12. Kunststoff-Bauteilpaar bestehend aus einem ersten Bauteil (1) und einem zweiten Bauteil (2), wobei in einem Bereich einer Fügestelle (F) der beiden Bauteile (1,2) deren angrenzenden Seitenränder (1.1, 2.1) derart zueinander korrespondierend geformt sind, dass die Seitenränder (1.1, 2.1) ineinander greifen.

13. Kunststoff-Bauteilpaar nach Anspruch 12, **dadurch gekennzeichnet, dass** die zwei Bauteile (1,2) mittels der zueinander korrespondierend geformten Seitenränder (1.1, 2.1) im Bereich der Fügestelle (F) eine Formschlussverbindung bilden.

14. Kunststoff-Bauteilpaar nach Anspruch 12 oder 13, **dadurch gekennzeichnet, dass** die Seitenränder (1.1, 2.1) der Bauteile (1,2) derart korrespondierend geformt sind, dass das eine Bauteil (1,2) in Ausform- oder Auswurfrichtung (D) des Formwerkzeugs in das andere Bauteil (1,2) einführbar ist.

15. Kunststoff-Bauteilpaar nach einem der Ansprüche 12 bis 14, **dadurch gekennzeichnet, dass** der Seitenrand (2.1) des einen Bauteils (2) mit mehreren, im Wesentlichen gleichförmigen aus dem Seitenrand (2.1) herausragenden Zahnelementen (2.2) versehen ist.

16. Kunststoff-Bauteilpaar nach Anspruch 15, **dadurch gekennzeichnet, dass** die Zahnelemente (2.2) in Längsausrichtung des Seitenrandes (2.1) alternierend an den gegenüberliegenden Seitenflächen (2.3.1, 2.3.2) angeordnet sind.

17. Kunststoff-Bauteilpaar nach einem der Ansprüche 12 bis 16, **dadurch gekennzeichnet, dass** der Seitenrand (1.1) des anderen Bauteils (1) in Längsrichtung gesehen mit mehreren, im Wesentlichen gleichförmigen Ausnehmungen (1.2) versehen ist.

18. Kuriststoff-Bauteilpaar nach Anspruch 17, **dadurch gekennzeichnet, dass** die Ausnehmungen (1.2) in Längsausrichtung der Oberfläche des Seitenrandes (1.1) alternierend an den gegenüberliegenden Seitenflächen (1.3.1, 1.3.2) angeordnet sind.

19. Kunststoff-Bauteilpaar nach Anspruch 17 oder 18, **dadurch gekennzeichnet, dass** die Ausnehmungen (1.2) zu den Abmessungen und/oder der Form der Zahnelemente (2.2) korrespondierende Abmessungen und/oder eine korrespondierende Form aufweisen.

20. Werkzeug zum Spritzgießen von Bauteilen (1, 2) aus Kunststoff, insbesondere zur Durchführung eines Verfahrens nach einem der Ansprüche 1 bis 11, mit einer derartigen Werkzeugform an einer Trennebene, dass sich an dieser eine Fügestelle (F) von zwei Bauteilen ergibt, indem der Seitenrand (1.1, 2.1) des einen Bauteils (1, 2) derart korrespondierend zum gegenüberliegenden Seitenrand (1.1, 2.1) des anderen Bauteils (1,2) formbar ist, dass die angrenzenden Seitenränder (1.1, 2.1) der beiden Bauteile (1,2) ineinander greifen.
